# EUROPEAN PATENT SPECIFICATION

(11) **EP 4 107 244 B1**
(45) Date of publication and mention of the grant of the patent: **18.12.2024**
(21) Application number: 21709499.4
(22) Date of filing: 18.02.2021
(51) Int. Cl.: C12G 3/02, C12G 3/021, C12G 3/024, C12G 3/06, C12G 3/07, C12G 3/08, C12H 6/02

(54) **METHOD FOR MAKING SUGARCANE DISTILLATE**
VERFAHREN ZUM HERSTELLEN VON ZUCKERROHRDESTILLAT
PROCÉDÉ DE PRODUCTION D'UN DISTILLAT DE CANNE À SUCRE

(30) Priority: 19.02.2020 NL 2024944
(43) Date of publication of application: 28.12.2022
(73) Proprietor: Koster, Erik Theodorus Maria, 7081 CN Gendringen (NL)
(72) Inventor: Koster, Erik Theodorus Maria, 7081 CN Gendringen (NL)
(74) Representative: de Jong, Maurits David
(86) International application number: PCT/NL2021/050108
(87) International publication number: WO 2021/167456

(56) References cited:
- WO-A1-2017/216552
- GB-A- 957 972
- JP-A- 2016 073 228
- US-A- 5 695 795
- US-A1- 2007 248 730
- US-A1- 2010 297 290
- ANONYMOUS: "Trois Rivières Cannes Brûlées Rum 70cl 43°", 2 May 2018 (2018-05-02), XP055797264, Retrieved from the Internet <URL:https://www.comptoir-irlandais.com/en/white-rum/6945-trois-rivieres-cannes-brulees.html> [retrieved on 20210420]
- ANONYMOUS: "Cannes Brûlées | The Bar Editions | Trois Rivières", 8 February 2018 (2018-02-08), pages 1 - 4, XP055797257, Retrieved from the Internet <URL:https://plantationtroisrivieres.com/en/the-collection/the-bar-editions/cannes-brulees/> [retrieved on 20210420]
- ANONYMOUS: "Rhum agricole TROIS RIVIERES Cannes Brûlées 43% - Maison du Whisky", 13 June 2019 (2019-06-13), XP055797270, Retrieved from the Internet <URL:https://www.whisky.fr/en/trois-rivieres-cannes-brulees.html> [retrieved on 20210420]
- COELHO CHRISTIAN ET AL: "Effect of ageing on lees and distillation process on fermented sugarcane molasses for the production of rum", FOOD CHEMISTRY, ELSEVIER LTD, NL, vol. 303, 22 August 2019 (2019-08-22), XP085787738, ISSN: 0308-8146, [retrieved on 20190822], DOI: 10.1016/J.FOODCHEM.2019.125405
- PATRICK BROSSAD: "Report: The influence of the peat composition on the whisky flavours", 29 May 2011 (2011-05-29), XP055797272, Retrieved from the Internet <URL:https://www.whisky-news.com/En/reports/Peat_smoke_whisky.html> [retrieved on 20210420]

## Description

The invention relates to a method for making sugarcane distillate, such as for instance rum, comprising the steps of:
- providing fermentation component for the yeast fermentation, which fermentation component is selected from at least one of the fully sugarcane-derived products, such as for instance sugarcane juice, cane sugar or sugarcane molasses;
- yeast fermenting the fermentation component into an alcoholic mixture;
- distilling the alcoholic mixture.

Such sugarcane distillates are for instance rum, cachaça and arrack. Most sugarcane distillates have been brewed for centuries in areas where cane sugar is produced. Rum is characterized inter alia in that it can be made using many different methods, which are generally characteristic of its origin. An example of a known rum variety, is the Cannes Brûlées rum produced by Trois Rivières, Martinique. This rum is produced with sugarcanes which are burnt before harvesting.

European legislation therefore has in the form of Regulation (EU) 2019/787 a fairly broad definition of drinks which may carry the name rum. According to this legislation, rum is a distillate which is made exclusively by distilling the product obtained from alcoholic yeast fermentation of either molasses, or syrup, originating from the production of cane sugar, or the juice of the sugarcane itself, distilled to less than 96% by volume, in a manner such that the distillate can be observed to have the specific organoleptic qualities of rum. The alcohol percentage of rum lies between 37.5 and 96% by volume. No aroma or alcohol may however be added to rum.

A drawback of such sugarcane distillates, particularly rum, is that the options for obtaining a characteristic flavour palate are limited because only sugarcane may be used as component.

It is now an object of the invention to obviate the above stated drawback, or at least to provide an alternative method of making sugarcane distillate.

This object is achieved with a method according to the preamble, characterized in that, before the step of yeast fermenting the fermentation component, the fermentation component is smoked by bringing the fermentation component into contact with smoke.

By smoking the fermentation component, such as for instance (a mixture of) sugarcane, sugarcane juice, cane sugar or sugarcane molasses, the organoleptic spectrum of the obtained final distillate is widened without the organoleptic qualities of the original distillate being lost. A rum, within the definitions of Regulation (EU) 2019/787, with a smoke flavour can thus for instance be obtained according to the method without aromatizing the rum.

For the purpose of obtaining the desired effect the smoke used comes into contact with the fermentation component. The smoke can for instance be guided along the fermentation component.

The yeast fermentation and distillation take place under conditions known for sugarcane distillates. Yeast and water are thus added to the fermentation component for the yeast fermentation. Distillation can for instance take place using batch distillation or kettle distillation, but also using column distillation or other distillation methods.

In a preferred embodiment of a method according to the invention the smoking of the fermentation component takes place at a temperature of a maximum of 25°C.

Cold smoking of the fermentation component results in no or only very limited curing of the component, and moisture is also extracted to only very limited extent. The original flavour of the fermentation component is hereby preserved as much as possible.

In an embodiment of a method according to the invention the smoking of the fermentation component takes place at a temperature higher than 25°C, preferably at a temperature in the range of 60-80°C.

Hot smoking of the fermentation component makes it possible to achieve a different organoleptic spectrum in that slight curing of the component occurs. The possible moisture balance of the fermentation component also changes due to the higher temperatures, whereby a different taste sensation can also be achieved. The smoking can for instance take place at a temperature in the range of 60-80°C, since within this temperature range the fermentation component does not dry out too quickly during smoking.

In another embodiment of a method according to the invention additional fermentation component is added after the step of smoking, which additional fermentation component is selected from at least one of the components sugarcane and products made completely of sugarcane, such as for instance sugarcane juice, cane sugar or sugarcane molasses, which additional fermentation component is not smoked.

The degree of smoke flavour in the final product can be varied by the addition, after smoking of the fermentation component, of additional, unsmoked, fermentation component.

The additional fermentation component can for instance be added before the step of yeast fermenting.

Also according to the invention is an embodiment of a method wherein the smoke comes from wood.

Smoke from smouldering or burning wood has good organoleptic qualities for the sugarcane distillate, whereby a pleasant taste sensation can be effected in a user. Wood types such as cherry, apple, birch, beech, oak, maple, hickory or pecan can for instance be used for the smoking. A distinctive flavour profile can also be obtained with combinations of wood types.

Another embodiment of a method according to the invention is a method wherein the smoke comes from peat.

Smoke from smouldering or burning peat has good organoleptic qualities for the sugarcane distillate, whereby a pleasant taste sensation can be effected in a user. It is also possible to opt for a combination of peat smoke and wood smoke.

These and other features of the invention are further elucidated with reference to the accompanying drawing.

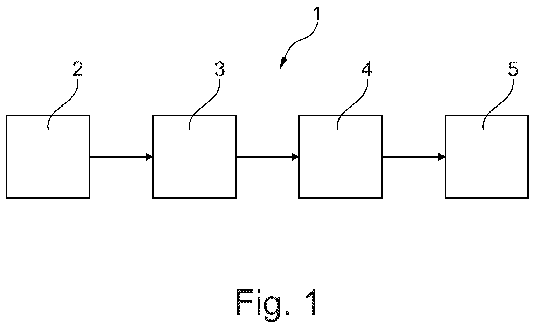

Figure 1 shows a flow diagram of a method according to the invention.

Figure 1 shows a flow diagram 1 of a method according to the invention. In a first step 2 fermentation component is provided. The fermentation component is smoked in a second step 3. In a third step 4 the component is yeast fermented into an alcoholic mixture, which is distilled in the fourth step 5. Unsmoked additional fermentation component can optionally be added, for instance between the second step 3 and the third step 4.

## Claims

1. Method for making sugarcane distillate, such as for instance rum, comprising the steps of:
- providing fermentation component for the yeast fermentation, which fermentation component is selected from at least one of the fully sugarcane-derived products, such as for instance sugarcane juice, cane sugar or sugarcane molasses;
- yeast fermenting the fermentation component into an alcoholic mixture;
- distilling the alcoholic mixture,
**characterized in that,** before the step of yeast fermenting the fermentation component, the fermentation component is smoked by bringing the fermentation component into contact with smoke.

2. Method according to claim 1, wherein the smoking of the fermentation component takes place at a temperature of a maximum of 25°C.

3. Method according to claim 1, wherein the smoking of the fermentation component takes place at a temperature higher than 25°C, preferably at a temperature in the range of 60-80°C.

4. Method according to any one of the foregoing claims, wherein additional fermentation component is added after the step of smoking, which additional fermentation component is selected from at least one of the components sugarcane and products made completely of sugarcane, such as for instance sugarcane juice, cane sugar or sugarcane molasses, which additional fermentation component is not smoked.

5. Method according to any one of the foregoing claims, wherein the smoke comes from wood.

6. Method according to any one of the foregoing claims, wherein the smoke comes from peat.

## Patentansprüche

1. Verfahren zur Herstellung von Zuckerrohrdestillat, wie beispielsweise Rum, umfassend die Schritte zum:
- Bereitstellen einer Gärungskomponente für die Hefegärung, wobei die Gärungskomponente aus mindestens einem der vollständig aus Zuckerrohr gewonnenen Produkte, wie beispielsweise Zuckerrohrsaft, Rohrzucker oder Zuckerrohrmelasse ausgewählt ist;
- Hefegärung der Gärungskomponente zu einem alkoholischen Gemisch;
- Destillieren des alkoholischen Gemisches,
**dadurch gekennzeichnet, dass** die Gärungskomponente vor dem Schritt der Hefegärung der Gärungskomponente durch Inkontaktbringen der Gärungskomponente mit Rauch geräuchert wird.

2. Verfahren nach Anspruch 1, wobei das Räuchern der Gärungskomponente bei einer Temperatur von höchstens 25 °C erfolgt.

3. Verfahren nach Anspruch 1, wobei das Räuchern der Gärungskomponente bei einer Temperatur von mehr als 25 °C, vorzugsweise bei einer Temperatur im Bereich von 60-80 °C erfolgt.

4. Verfahren nach einem der vorstehenden Ansprüche, wobei nach dem Schritt des Räucherns eine zusätzliche Gärungskomponente hinzugefügt wird, wobei die zusätzliche Gärungskomponente aus mindestens einer der Komponenten Zuckerrohr und vollständig aus Zuckerrohr hergestellte Produkte, wie beispielsweise Zuckerrohrsaft, Rohrzucker oder Zuckerrohrmelasse, ausgewählt ist und die zusätzliche Gärungskomponente nicht geräuchert wird.

5. Verfahren nach einem der vorstehenden Ansprüche, wobei der Rauch von Holz stammt.

6. Verfahren nach einem der vorstehenden Ansprüche, wobei der Rauch aus Torf stammt.

## Revendications

1. Procédé de fabrication de distillat de canne à sucre, comme par exemple du rhum, comprenant les étapes de :
- fourniture d'un composant de fermentation pour la fermentation par levure, lequel composant de fermentation est choisi parmi au moins l'un des produits entièrement dérivés de la canne à sucre, comme par exemple le jus de canne à sucre, le sucre de canne ou la mélasse de canne à sucre ;
- fermentation par levure du composant de fermentation en un mélange alcoolique ;
- distillation du mélange alcoolique,
**caractérisé en ce que,** avant l'étape de fermentation par levure du composant de fermentation, le composant de fermentation est fumé par mise en contact du composant de fermentation avec de la fumée.

2. Procédé selon la revendication 1, dans lequel le fumage du composant de fermentation a lieu à une température maximale de 25°C.

3. Procédé selon la revendication 1, dans lequel le fumage du composant de fermentation a lieu à une température supérieure à 25°C, de préférence à une température comprise dans la plage de 60-80°C.

4. Procédé selon l'une quelconque des revendications précédentes, dans lequel un composant de fermentation supplémentaire est ajouté après l'étape de fumage, lequel composant de fermentation supplémentaire est choisi parmi au moins l'un des composants canne à sucre et produits entièrement fabriqués à partir de canne à sucre, comme par exemple le jus de canne à sucre, le sucre de canne ou la mélasse de canne à sucre, lequel composant de fermentation supplémentaire n'est pas fumé.

5. Procédé selon l'une quelconque des revendications précédentes, dans lequel la fumée provient du bois.

6. Procédé selon l'une quelconque des revendications précédentes, dans lequel la fumée provient de la tourbe.
